# EUROPEAN PATENT APPLICATION

(11) **EP 4 697 418 A1**
(43) Date of publication of application: **18.02.2026**
(21) Application number: 24803674.1
(22) Date of filing: 07.05.2024
(51) Int. Cl.: H01M 8/04119

(54) **FUEL CELL HUMIDIFIER**

(30) Priority: 11.05.2023 KR 20230060809
(71) Applicant: Kolon Industries, Inc., Seoul 07793 (KR)
(72) Inventor: KIM, Do Woo, Seoul 07793 (KR); HER, Jung Kun, Seoul 07793 (KR); KI, Sung Kwan, Seoul 07793 (KR)
(74) Representative: Vossius & Partner Patentanwälte Rechtsanwälte mbB
(86) International application number: PCT/KR2024/006088
(87) International publication number: WO 2024/232621

(57) **Abstract**

The present invention relates to a fuel cell humidifier comprising: a humidification module which uses wet gas to humidify dry gas to be supplied to a fuel cell stack; a first cap which is coupled to one end of the humidification module; and a second cap which is coupled to the other end of the humidification module, wherein the humidification module comprises: a cartridge which includes a bundle of hollow fiber membranes; a mid-case in which the cartridge is accommodated; and a flow path change unit which is disposed between the inner surface of the mid-case and the outer surface of the cartridge.

## Description

### [Technical Field]

The present invention relates to a fuel cell humidifier for supplying a humidified gas to a fuel cell.

### [Background Art]

Fuel cells have advantages of being able to continuously produce electricity as long as hydrogen and oxygen are supplied and having efficiency that is about twice that of an internal combustion engine because they have no heat loss, unlike general chemical cells such as dry cells or storage cells.

Further, since chemical energy generated through coupling between hydrogen and oxygen is directly converted into electrical energy, emission of pollutants is reduced. Therefore, the fuel cells have advantages of being environmentally friendly and being able to reduce concerns about resource depletion due to increased energy consumption.

These fuel cells may be roughly classified into a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on the type of electrolyte used.

These fuel cells fundamentally operate according to the same principle but differ from one another in terms of the type of fuel used, an operating temperature, a catalyst, an electrolyte, or the like. Among the fuel cells, the PEMFC is known to be the most promising not only for small-scale stationary power generation equipment but also for transportation systems because the PEMFC operates at a lower temperature than other fuel cells and can be miniaturized due to a high output density.

One of the most important factors in improving the performance of the PEMFC is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include: 1) a bubbler humidification scheme for filling a pressure-resistant container with water and then passing a target gas through a diffuser to supply moisture; 2) a direct injection scheme for calculating a moisture supply amount required for a fuel cell reaction and directly supplying moisture to a gas flow pipe through a solenoid valve; and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively allows only water vapor contained in an off-gas to pass through is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

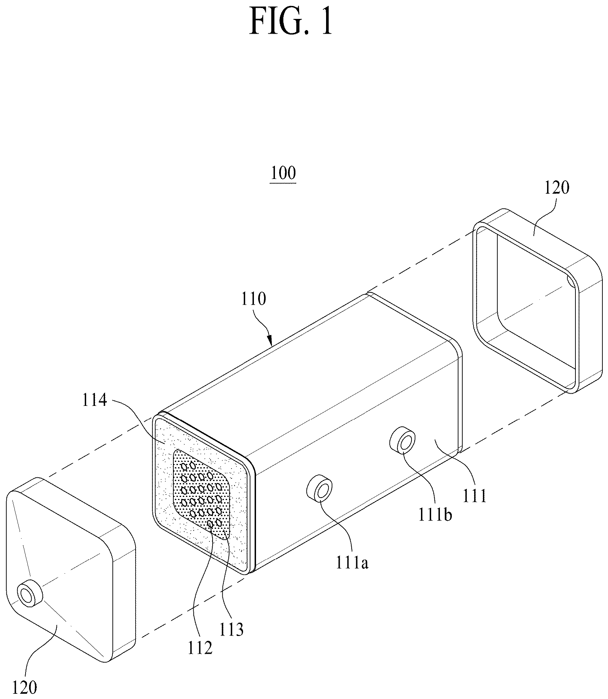

FIG. 1 is a schematic exploded perspective view of a typical fuel cell humidifier.

As illustrated in FIG. 1, a typical membrane humidification type humidifier 100 includes a humidification module 110 in which moisture exchange occurs between air supplied from the outside and an off-gas discharged from a fuel cell stack (not illustrated) and caps 120 coupled to both ends of the humidification module 110.

One of the caps 120 delivers air supplied from the outside to the humidification module 110, and the other delivers air humidified by the humidification module 110 to the fuel cell stack.

The humidification module 110 includes a mid-case 111 having an off-gas inlet 111a and an off-gas outlet 111b and a plurality of hollow fiber membranes 112 in the mid-case 111. Both ends of the hollow fiber membranes 112 are potted to a fixing layer 113. The fixing layer 113 is generally formed by curing a liquid polymer such as a liquid polyurethane resin through a casting scheme. The fixing layer 113 to which the ends of the hollow fiber membranes 112 are potted and a resin layer 114 between the fixing layer 113 and the mid-case 111 block inner spaces of the caps 120 from an inner space of the mid-case 111. Like the fixing layer 113, the resin layer 114 is generally formed by curing a liquid polymer such as a liquid polyurethane resin through a casting scheme.

Air supplied from the outside flows along hollows of the hollow fiber membranes 112. An off-gas flowing into the mid-case 111 through the off-gas inlet 111a comes into contact with outer surfaces of the hollow fiber membranes 112 and then flows out from the mid-case 111 through the off-gas outlet 111b. When the off-gas comes into contact with the outer surfaces of the hollow fiber membranes 112, moisture contained in the off-gas permeates through the hollow fiber membranes 112, thereby humidifying the air flowing along the hollows of the hollow fiber membranes 112.

In this case, conventionally, there has been a problem in which disconnection, damage, breakage, or the like occurs in the hollow fiber membranes 112 due to pressure or the like of the off-gas flowing in through the off-gas inlet 111a.

### [Disclosure]

### [Technical Problem]

The present invention has been devised to address the above-described problems and is directed to providing a fuel cell humidifier capable of reducing disconnection, damage, breakage, or the like that occurs in a hollow fiber membrane bundle due to pressure or the like of a gas.

### [Technical Solution]

To achieve the above objective, the present invention may include the following configurations.

A fuel cell humidifier according to the present invention may include: a humidification module using a wet gas to humidify a dry gas to be supplied to a fuel cell stack; a first cap coupled to one end of the humidification module; and a second cap coupled to the other end of the humidification module. The humidification module may include a cartridge including a hollow fiber membrane bundle, a mid-case in which the cartridge is accommodated, and a flow path changer disposed between an inner surface of the mid-case and an outer surface of the cartridge. The mid-case may include a mid-inlet for inflow of a first gas and a mid-outlet that is disposed apart from the mid-inlet in a first axial direction for outflow of the first gas. The cartridge may be disposed inside the flow path changer.

In the fuel cell humidifier according to the present invention, the flow path changer may include a blocking portion disposed to correspond to the mid-inlet to block passage of the first gas and a plurality of passage holes formed at positions spaced from the blocking portion.

### [Advantageous Effects]

A fuel cell humidifier according to the present invention is implemented to lower a risk of disconnection, damage, breakage, or the like occurring in a hollow fiber membrane bundle due to pressure or the like of a first gas. Accordingly, the present invention can maintain performance of humidification using the hollow fiber membrane bundle and can contribute to reducing operating costs of a fuel cell system by reducing maintenance and repair costs for the hollow fiber membrane bundle or the like. In addition, since the maintenance and repair cycle for the hollow fiber membrane bundle or the like can be extended, the present invention can contribute to increasing an operation rate of the fuel cell system.

### [Description of Drawings]

FIG. 1 is a schematic exploded perspective view of a typical fuel cell humidifier.
FIG. 2 is a schematic exploded perspective view of a fuel cell humidifier according to the present invention.
FIG. 3 is a schematic exploded cross-sectional view of the fuel cell humidifier according to the present invention along line I-I of FIG. 2.
FIG. 4 is a schematic coupling cross-sectional view of the fuel cell humidifier according to the present invention along line I-I of FIG. 2.
FIGS. 5 and 6 are schematic plan views of a cartridge of the fuel cell humidifier according to the present invention.
FIGS. 7 and 8 are schematic regular cross-sectional views of the fuel cell humidifier according to the present invention along line II-II of FIG. 4.
FIG. 9 is a schematic side cross-sectional view of the fuel cell humidifier according to the present invention along line III-III of FIG. 2.
FIG. 10 is a schematic regular cross-sectional view shown by enlarging a portion of a flow path changer of the fuel cell humidifier according to the present invention along line II-II of FIG. 4.
FIG. 11 is a schematic regular cross-sectional view shown by enlarging the fuel cell humidifier according to the present invention along line II-II of FIG. 4.
FIG. 12 is a schematic side cross-sectional view showing a modification of the flow path changer of the fuel cell humidifier according to the present invention along line III-III of FIG. 2.

### [Best Modes]

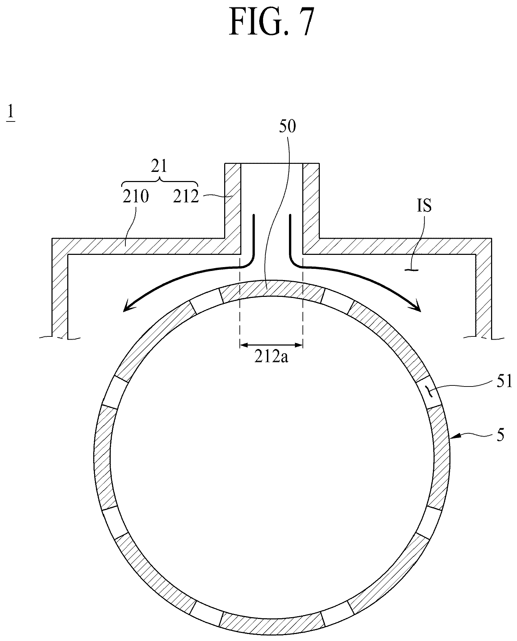

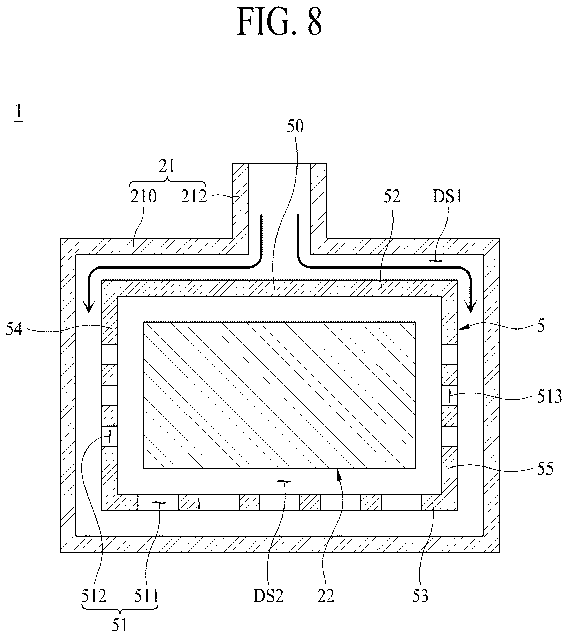

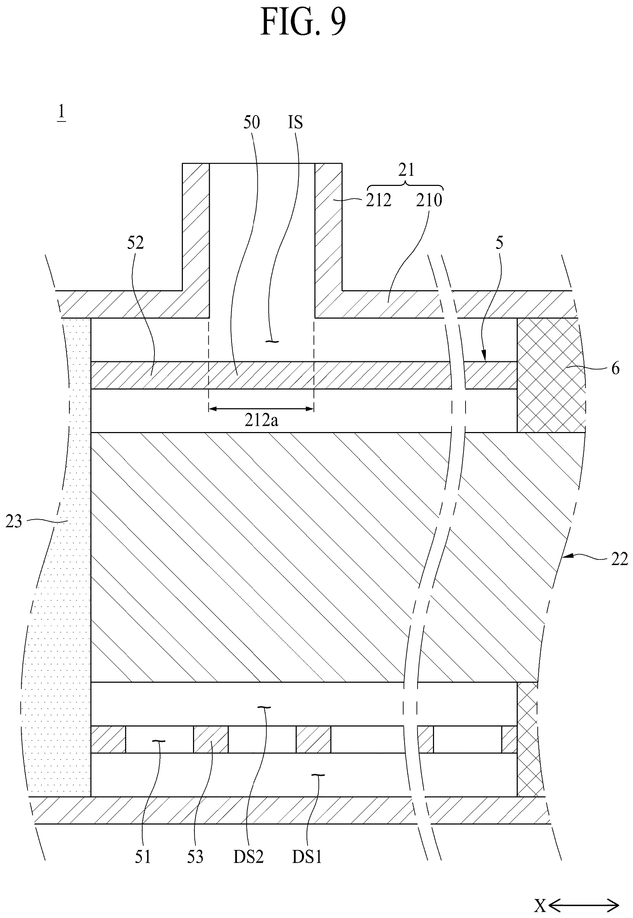

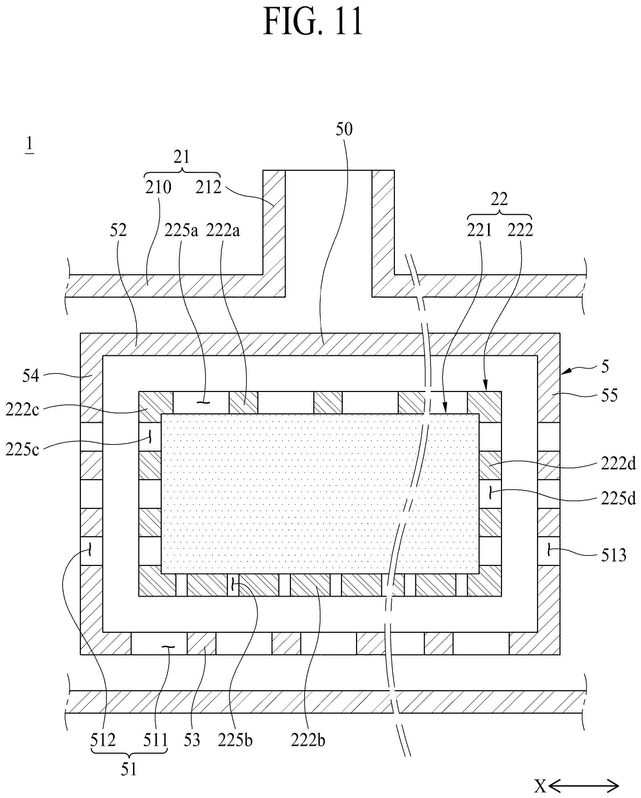

Hereinafter, embodiments of a fuel cell humidifier according to the present invention will be described in detail with reference to the accompanying drawings. Meanwhile, in FIG. 7, a cartridge disposed inside a flow path changer is omitted. In FIGS. 9 to 12, two parallel one-dot chain lines are break lines. In FIGS. 8, 9, and 12, the cartridge is shown simplistically with hatching. In FIG. 11, a hollow fiber membrane bundle is shown simplistically with hatching.

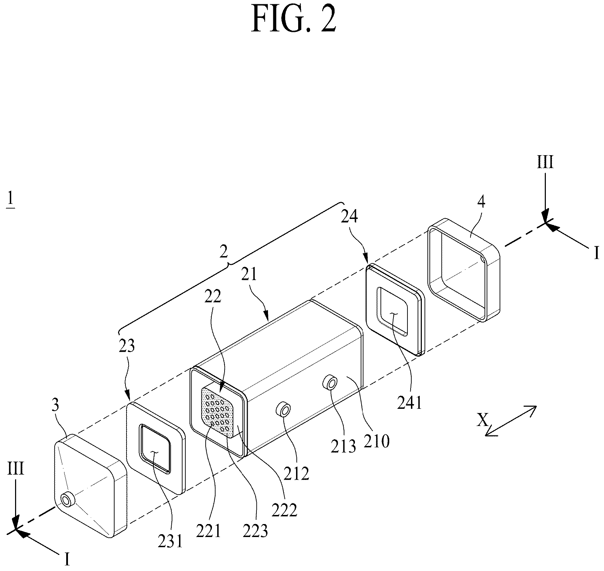

Referring to FIGS. 2 to 4, a fuel cell humidifier 1 according to the present invention uses a wet gas to humidify a dry gas to be supplied to a fuel cell stack (not illustrated). The wet gas may be a gas discharged from the fuel cell stack. The dry gas may be a fuel gas or air. The dry gas may be supplied to the fuel cell stack after being humidified by the wet gas. The fuel cell humidifier 1 according to the present invention includes a humidification module 2 for humidifying the dry gas, a first cap 3 coupled to one end of the humidification module 2, and a second cap 4 coupled to the other end of the humidification module 2.

Referring to FIGS. 2 to 4, the humidification module 2 humidifies the dry gas. The first cap 3 may be coupled to the one end of the humidification module 2. The second cap 4 may be coupled to the other end of the humidification module 2. The humidification module 2 may use a first gas and a second gas to supply a humidified dry gas to the fuel cell stack. When the first gas is a dry gas, the second gas may be a wet gas. In this case, the first gas may be supplied to the fuel cell stack after being humidified by the second gas. When the first gas is a wet gas, the second gas may be a dry gas. In this case, the second gas may be supplied to the fuel cell stack after being humidified by the first gas.

The humidification module 2 includes a mid-case 21 and at least one cartridge 22.

The cartridge 22 is coupled to the mid-case 21. The cartridge 22 may be accommodated inside the mid-case 21. Both ends of the mid-case 21 are open. In this case, an accommodation hole 211 may be formed in the mid-case 21. The accommodation hole 211 may be formed to pass through the mid-case 21 in a first axial direction (X-axis direction). At least one cartridge 22 may be disposed in the accommodation hole 211.

The mid-case 21 may include a mid-main body 210. The mid-main body 210 accommodates the cartridge 22. The cartridge 22 may be accommodated in the mid-main body 210 by being disposed inside the mid-main body 210. At least one cartridge 22 may be accommodated in the mid-main body 210. The accommodation hole 211 may be formed to pass through the mid-main body 210 in the first axial direction (X-axis direction).

The mid-case 21 may include a mid-inlet 212 and a mid-outlet 213. The mid-inlet 212 may allow the first gas to flow into the mid-main body 210. The mid-outlet 213 may allow the first gas to flow out from inside the mid-main body 210. The mid-outlet 213 and the mid-inlet 212 may each protrude from the mid-main body 210. The mid-outlet 213 and the mid-inlet 212 may be disposed apart from each other in the first axial direction (X-axis direction). The mid-outlet 213, the mid-inlet 212, and the mid-main body 210 may also be integrally formed.

The cartridge 22 is disposed inside the mid-case 21. The cartridge 22 may be accommodated in the mid-main body 210. The cartridge 22 includes a hollow fiber membrane bundle 221. The hollow fiber membrane bundle 221 may be coupled to the cartridge 22 and modularized. Accordingly, through a process of coupling the cartridge 22 to the mid-case 21, the hollow fiber membrane bundle 221 may be installed inside the mid-case 21. Therefore, the fuel cell humidifier 1 according to the present invention can improve ease of an installation task, a separation task, and a replacement task for the hollow fiber membrane bundle 221. The hollow fiber membrane bundle 221 may include a plurality of hollow fiber membranes. The hollow fiber membranes may each include a hollow for passing the second gas.

The cartridge 22 may include an inner case 222.

The inner case 222 has openings at both ends, and the hollow fiber membrane bundle 221 is placed therein. The hollow fiber membrane bundle 221 may be disposed inside the inner case 222 and modularized. The hollow fiber membrane bundle 221 may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamideimide resin, a polyesterimide resin, or a mixture of two or more thereof.

The cartridge 22 may include a first fixing layer 223. The first fixing layer 223 fixes one end of the hollow fiber membrane bundle 221. The first fixing layer 223 may close the opening formed at one end of the inner case 222. In this case, the first fixing layer 223 may be formed to not block the hollows of the hollow fiber membranes. The first fixing layer 223 may be formed by curing a liquid resin, such as a liquid polyurethane resin, through a casting process. The first fixing layer 223 may have one portion located inside the inner case 222 and another portion protruding to the outside of the inner case 222. The first fixing layer 223 may fix the one end of the hollow fiber membrane bundle 221 and the inner case 222.

The cartridge 22 may include a second fixing layer 224. The second fixing layer 224 fixes the other end of the hollow fiber membrane bundle 221. The second fixing layer 224 may close the opening formed at the other end of the inner case 222. In this case, the second fixing layer 224 may be formed to not block the hollows of the hollow fiber membranes. The second fixing layer 224 may be formed by curing a liquid resin, such as a liquid polyurethane resin, through a casting process. The second fixing layer 224 may have one portion located inside the inner case 222 and another portion protruding to the outside of the inner case 222. The second fixing layer 224 may fix the other end of the hollow fiber membrane bundle 221 and the inner case 222. Since the second fixing layer 224 and the first fixing layer 223 are formed to not block the hollows of the hollow fiber membranes, the second gas may be supplied to the hollows of the hollow fiber membranes without being interfered with by the second fixing layer 224 and the first fixing layer 223 and may flow out from the hollows of the hollow fiber membranes without being interfered with by the second fixing layer 224 and the first fixing layer 223.

Referring to FIGS. 2 to 6, the cartridge 22 may include an inner inlet 225 and an inner outlet 226.

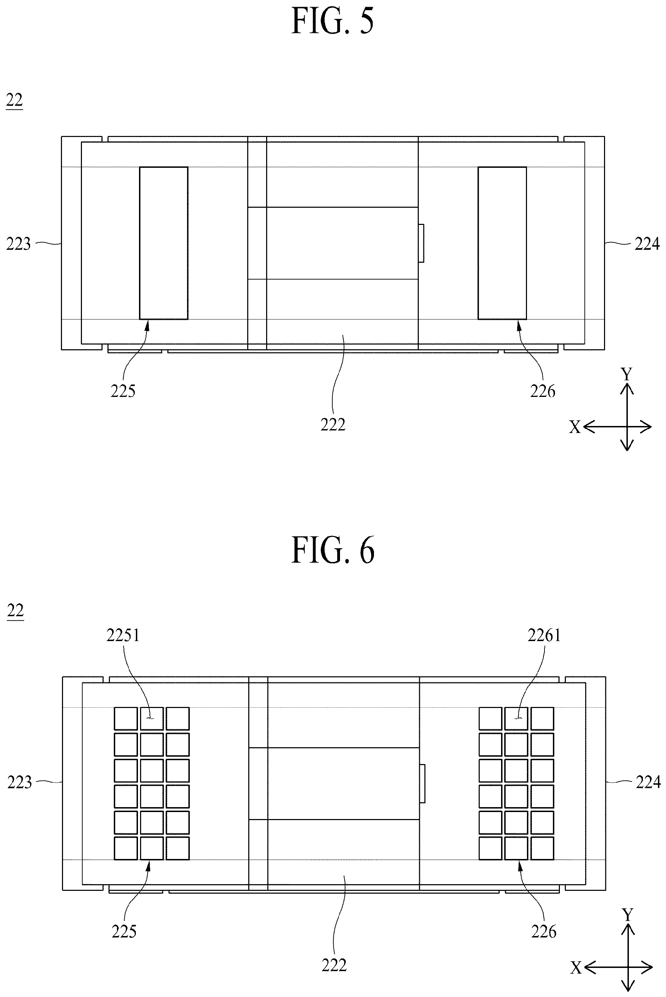

The inner inlet 225 is formed in the inner case 222. The inner inlet 225 may be formed in at least one side surface among side surfaces of the inner case 222. The side surfaces of the inner case 222 may be surfaces disposed to surround an inner hole formed to pass through the inner case 222 to form the openings at both ends of the inner case 222. The inner hole may be formed to extend in the first axial direction (X-axis direction) and pass through the inner case 222. The inner inlet 225 may be disposed toward at least one sidewall among sidewalls of the mid-case 21. The inner inlet 225 may allow the first gas to flow into the inner case 222. The inner inlet 225 may be formed to pass through the inner case 222. As illustrated in FIG. 5, the inner inlet 225 may be implemented as one through-hole that passes through the inner case 222. As illustrated in FIG. 6, the inner inlet 225 may be implemented as a plurality of through-holes that pass through the inner case 222. In this case, the inner inlet 225 may include a plurality of inflow windows 2251 formed to pass through different portions of the inner case 222. The inflow windows 2251 may be disposed to constitute a matrix form by being spaced from each other in each of the first axial direction (X-axis direction) and a second axial direction (Y-axis direction). The second axial direction (Y-axis direction) and the first axial direction (X-axis direction) are axial directions disposed perpendicularly to each other.

The inner outlet 226 is formed in the inner case 222. The inner outlet 226 may be formed in at least one side surface among side surfaces of the inner case 222. The inner outlet 226 may allow the first gas to flow out from inside the inner case 222. The inner outlet 226 may be formed to pass through the inner case 222. As illustrated in FIG. 5, the inner outlet 226 may be implemented as one through-hole that passes through the inner case 222. As illustrated in FIG. 6, the inner outlet 226 may be implemented as a plurality of through-holes that pass through the inner case 222. In this case, the inner outlet 226 may include a plurality of outflow windows 2261 formed to pass through different portions of the inner case 222. The outflow windows 2261 may be disposed to constitute a matrix form by being spaced from each other in each of the first axial direction (X-axis direction) and the second axial direction (Y-axis direction). The inner outlet 226 and the inner inlet 225 may be disposed at positions spaced from each other in the first axial direction (X-axis direction).

When the first gas is a wet gas, the first gas may be supplied between an inner surface of the mid-case 21 and an outer surface of the cartridge 22 through the mid-inlet 212, may be supplied to the inside of the cartridge 22 through the inner inlet 225, and may come into contact with outer surfaces of the hollow fiber membranes of the hollow fiber membrane bundle 221. In this process, moisture contained in the first gas may permeate through the hollow fiber membranes of the hollow fiber membrane bundle 221, thereby humidifying the second gas flowing along the hollows of the hollow fiber membranes of the hollow fiber membrane bundle 221. The humidified second gas may flow out from the hollow fiber membrane bundle 221 and then may be supplied to the fuel cell stack through the first cap 3 or the second cap 4. After the second gas is humidified, the first gas may flow out between the outer surface of the cartridge 22 and the inner surface of the mid-case 21 through the inner outlet 226 and may flow to the outside of the mid-case 21 through the mid-outlet 213. In this case, the first gas may be an off-gas discharged from the fuel cell stack.

When the first gas is a dry gas, the first gas may be supplied between the inner surface of the mid-case 21 and the outer surface of the cartridge 22 through the mid-inlet 212, may be supplied to the inside of the cartridge 22 through the inner inlet 225, and may come into contact with the outer surfaces of the hollow fiber membranes of the hollow fiber membrane bundle 221. In this process, moisture of the second gas flowing along the hollows of the hollow fiber membranes of the hollow fiber membrane bundle 221 may permeate through the hollow fiber membranes of the hollow fiber membrane bundle 221, thereby humidifying the first gas flowing into the cartridge 22. The humidified first gas may flow out between the outer surface of the cartridge 22 and the inner surface of the mid-case 21 through the inner outlet 226, may flow to the outside of the mid-case 21 through the mid-outlet 213, and then may be supplied to the fuel cell stack. After the first gas is humidified, the second gas may flow out from the hollow fiber membrane bundle 221 and then may flow to the outside through the first cap 3 or the second cap 4. In this case, the second gas may be an off-gas discharged from the fuel cell stack.

The humidification module 2 may include a first sealing 23.

The first sealing 23 seals between the inner surface of the mid-case 21 and the outer surface of the cartridge 22 at the one end of the mid-case 21. Accordingly, the first sealing 23 may allow the first cap 3 to fluidly communicate only with the hollow fiber membrane bundle 221. Therefore, the first sealing 23 may prevent the first gas and the second gas from being directly mixed. The cartridge 22 may be inserted into a first insertion hole 231 formed in the first sealing 23. The first sealing 23 may be in contact with each of the inner surface of the mid-case 21, the outer surface of the cartridge 22, and the first fixing layer 223. Through this contact, the first sealing 23 may be hermetically coupled to the one end of the mid-case 21. In this case, the first sealing 23 may also be in contact with each of a portion of the inner surface of the mid-case 21, a portion of the outer surface of the cartridge 22, and a portion of the first fixing layer 223.

The first sealing 23 may be implemented using a first packing. The first packing may be hermetically coupled to the one end of the mid-case 21 through mechanical assembly. The first packing may be formed of an elastically compressible material. For example, the first packing may be formed of rubber. The first sealing 23 may also be implemented using a resin layer. In this case, the resin layer may be formed by curing a liquid polymer such as a liquid polyurethane resin through a casting scheme.

The humidification module 2 may include a second sealing 24.

The second sealing 24 seals between the inner surface of the mid-case 21 and the outer surface of the cartridge 22 at the other end of the mid-case 21. Accordingly, the second sealing 24 may allow the second cap 4 to fluidly communicate only with the hollow fiber membrane bundle 221. Therefore, the second sealing 24 may prevent the first gas and the second gas from being directly mixed. The cartridge 22 may be inserted into a second insertion hole 241 formed in the second sealing 24. The second sealing 24 may be in contact with each of the inner surface of the mid-case 21, the outer surface of the cartridge 22, and the second fixing layer 224. Through this contact, the second sealing 24 may be hermetically coupled to the other end of the mid-case 21. In this case, the second sealing 24 may also be in contact with each of a portion of the inner surface of the mid-case 21, a portion of the outer surface of the cartridge 22, and a portion of the second fixing layer 224.

The second sealing 23 may be implemented using a second packing. The second packing may be hermetically coupled to the other end of the mid-case 21 through mechanical assembly. The second packing may be formed of an elastically compressible material. For example, the second packing may be formed of rubber. The second sealing 24 may also be implemented using a resin layer. In this case, the resin layer may be formed by curing a liquid polymer such as a liquid polyurethane resin through a casting scheme.

Referring to FIGS. 2 to 4, the first cap 3 is coupled to the one end of the humidification module 2. A space between the first cap 3 and the cartridge 22 may be sealed relative to a space between the cartridge 22 and the mid-case 21 by the first sealing 23. The first cap 3 may include a first port 31. The first port 31 is for allowing the second gas to flow. The first port 31 may communicate with the hollows of the hollow fiber membranes of the hollow fiber membrane bundle 221. Accordingly, in a process in which the second gas flows between the first cap 3 and the hollow fiber membrane bundle 221, the second gas may flow in or out through the first port 31.

Referring to FIGS. 2 to 4, the second cap 4 is coupled to the other end of the humidification module 2. The second cap 4 may be disposed at a position spaced from the first cap 3 in the first axial direction (X-axis direction). A space between the second cap 4 and the cartridge 22 may be sealed relative to the space between the cartridge 22 and the mid-case 21 by the second sealing 24. The second cap 4 may include a second port 41. The second port 41 is for allowing the second gas to flow. The second port 41 may communicate with the hollows of the hollow fiber membranes of the hollow fiber membrane bundle 221. Accordingly, in a process in which the second gas flows between the second cap 4 and the hollow fiber membrane bundle 221, the second gas may flow in or out through the second port 41. When the second gas flows in through the second port 41, the second gas may flow out through the first port 31. In this case, the second gas may exchange moisture with the first gas while sequentially passing through the second cap 4, the hollows of the hollow fiber membranes of the hollow fiber membrane bundle 221, and the first cap 3. When the second gas flows out through the second port 41, the second gas may flow in through the first port 31. In this case, the second gas may exchange moisture with the first gas while sequentially passing through the first cap 3, the hollows of the hollow fiber membranes of the hollow fiber membrane bundle 221, and the second cap 4.

Here, when the first gas flowing in through the mid-inlet 212 immediately flows into the hollow fiber membrane bundle 221 through the inner inlet 225 of the cartridge 22, there is a high risk of disconnection, damage, breakage, or the like occurring in the hollow fiber membrane bundle 221 due to pressure or the like of the first gas. In order to prevent this, the fuel cell humidifier 1 according to the present invention may include a flow path changer 5 (illustrated in FIG. 7).

Referring to FIGS. 2 to 10, the flow path changer 5 is disposed between the inner surface of the mid-case 21 and the outer surface of the cartridge 22. In this case, the flow path changer 5 may be disposed inside the mid-case 21. The cartridge 22 may be disposed inside the flow path changer 5.

The flow path changer 5 may be disposed between the mid-inlet 212 and the cartridge 22 inside the mid-case 21 and may block the first gas flowing in through the mid-inlet 212 from immediately flowing toward the cartridge 22. In this case, the flow path changer 5 may guide the first gas flowing in through the mid-inlet 212 to flow in a direction other than toward the cartridge 22, thereby changing a flow direction of the first gas flowing in through the mid-inlet 212. Accordingly, the fuel cell humidifier 1 according to the present invention can lower a risk of disconnection, damage, breakage, or the like occurring in the hollow fiber membrane bundle 221 due to pressure or the like of the first gas flowing in through the mid-inlet 212. Therefore, the fuel cell humidifier 1 according to the present invention can maintain performance of humidification using the hollow fiber membrane bundle 221 and can contribute to reducing operating costs of a fuel cell system by reducing maintenance and repair costs for the hollow fiber membrane bundle 221 or the like. In addition, since the maintenance and repair cycle for the hollow fiber membrane bundle 221 or the like can be extended, the fuel cell humidifier 1 according to the present invention can contribute to increasing an operation rate of the fuel cell system.

Referring to FIG. 7, the flow path changer 5 may include a blocking portion 50 and a plurality of passage holes 51.

The blocking portion 50 blocks passage of the first gas. The blocking portion 50 may be disposed to correspond to the mid-inlet 212. The blocking portion 50 may be a portion of the flow path changer 5 that belongs to an inflow area 212a corresponding to the mid-inlet 212. Based on FIG. 8, a portion of the flow path changer 5 that is disposed vertically below the mid-inlet 212 may correspond to the blocking portion 50. The blocking portion 50 may be disposed to correspond to the mid-inlet 212 and may block passage of the first gas, thereby reducing the risk of disconnection, damage, breakage, or the like occurring in the hollow fiber membrane bundle 221 due to pressure or the like of the first gas flowing in through the mid-inlet 212.

The blocking portion 50 may be formed without the passage holes 51. Accordingly, the blocking portion 50 is implemented to completely block the first gas flowing in through the mid-inlet 212 from flowing toward the cartridge 22. In addition, accordingly, the blocking portion 50 may guide the first gas flowing in through the mid-inlet 212 to flow in a direction other than toward the cartridge 22, thereby changing a flow direction of the first gas. For example, as indicated with arrows in FIG. 7, the blocking portion 50 may guide the first gas flowing in through the mid-inlet 212 to flow in a direction other than toward the cartridge 22. Accordingly, since the blocking portion 50 can guide the first gas flowing in through the mid-inlet 212 to flow around and be delivered toward the cartridge 22 through the passage holes 51, humidification using the first gas can smoothly occur inside the cartridge 22.

The passage holes 51 may be formed to pass through the flow path changer 5. Accordingly, the passage holes 51 may allow the first gas to pass therethrough toward the cartridge 22. The passage holes 51 may be formed at positions spaced from the blocking portion 50. Accordingly, the fuel cell humidifier 1 according to the present invention is implemented so that the first gas flowing in through the mid-inlet 212 can be blocked from being immediately delivered toward the cartridge 22 using the blocking portion 50, and the first gas of which the flow direction has been changed by the blocking portion 50 can be delivered toward the cartridge through the passage holes 51. The first gas of which the flow direction has been changed by the blocking portion 50 may flow into the flow path changer 5 through the passage holes 51 and then flow into the cartridge 22. Accordingly, humidification using the first gas and the second gas may be performed inside the cartridge 22.

Although FIG. 7 illustrates that the flow path changer 5 is formed to have a hollow circular cross-section, the present invention is not limited thereto, and the flow path changer 5 may be formed to have cross-sections of various other shapes as long as the first gas flowing in through the mid-inlet 212 can be blocked from being immediately delivered toward the cartridge 22 using the blocking portion 50, and the first gas of which the flow direction has been changed by the blocking portion 50 can be delivered toward the cartridge 22 through the passage holes 51. For example, the flow path changer 5 may be formed to have cross-sections of various shapes such as an elliptical cross-section, a trapezoidal cross-section, a quadrangular cross-section, a pentagonal cross-section, a polygonal cross-section with six or more sides, a cross-section in which a flat plate type sidewall and a curved surface type sidewall are combined, etc. In this case, the cross-section of the flow path changer 5 may be in an axial direction perpendicular to the first axial direction (X-axis direction).

The flow path changer 5 will be described in detail below with reference to the accompanying drawings based on an embodiment in which the flow path changer 5 is formed to have a quadrangular cross-section. It should be apparent to those of ordinary skill in the art that embodiments in which the flow path changer 5 is formed to have cross-sections of various shapes such as an elliptical cross-section, a trapezoidal cross-section, a quadrangular cross-section, a pentagonal cross-section, a polygonal cross-section with six or more sides, a cross-section in which a flat plate type sidewall and a curved surface type sidewall are combined, etc., may be derived from the description of the embodiment in which the flow path changer 5 is formed to have a quadrangular cross-section.

Referring to FIGS. 8 to 10, the flow path changer 5 may include a blocking wall 52, a facing wall 53, a first sidewall 54, and a second sidewall 55.

The blocking wall 52 may be disposed toward the mid-inlet 212. The blocking wall 52 may correspond to any one of a plurality of sidewalls of the flow path changer 5. The flow path changer 5 may be disposed to surround an outer side of the cartridge 22 using the sidewalls. The blocking wall 52 may be disposed between the mid-inlet 212 and the cartridge 22 and may block passage of the first gas flowing in through the mid-inlet 212. In this case, the blocking wall 52 may guide the first gas flowing in through the mid-inlet 212 to flow in a direction other than toward the cartridge 22, thereby changing a flow direction of the first gas flowing in through the mid-inlet 212. Accordingly, the blocking wall 52 may lower a risk of disconnection, damage, breakage, or the like occurring in the hollow fiber membrane bundle 221 due to pressure or the like of the first gas flowing in through the mid-inlet 212. The blocking wall 52 may be implemented to include the blocking portion 50. In this case, the blocking portion 50 may be a portion of the blocking wall 52 that belongs to the inflow area 212a corresponding to the mid-inlet 212.

The blocking wall 52 may be formed without the passage holes 51. Accordingly, the blocking wall 52 is implemented to completely block the first gas flowing in through the mid-inlet 212 from flowing toward the cartridge 22. In addition, as indicated with arrows in FIG. 8, the blocking wall 52 may guide the first gas flowing in through the mid-inlet 212 to flow between the inner surface of the mid-case 21 and the first sidewall 54 and between the inner surface of the mid-case 21 and the second sidewall 55. Accordingly, since the blocking wall 52 can guide the first gas flowing in through the mid-inlet 212 to flow around and be delivered toward the cartridge 22 through the passage holes 51, humidification using the first gas can smoothly occur inside the cartridge 22. A surface of the blocking wall 52 toward the mid-inlet 212 may be formed to be flat. The blocking wall 52 may also be formed in a plate shape as a whole.

The facing wall 53 may be disposed to face the blocking wall 52. At least one cartridge 22 may be disposed between the facing wall 53 and the blocking wall 52. The facing wall 53 may correspond to a sidewall spaced the longest distance from the mid-inlet 212 among the plurality of sidewalls of the flow path changer 5. The facing wall 53 may be formed in a plate shape as a whole.

The first sidewall 54 may be coupled to one side of each of the blocking wall 52 and the facing wall 53. Through the first sidewall 54, the one side of the blocking wall 52 and the one side of the facing wall 53 may be connected to each other. The first sidewall 54 may correspond to any one of the plurality of sidewalls of the flow path changer 5. Based on FIG. 8, when the blocking wall 52 and the facing wall 53 are disposed to be laid horizontally, the first sidewall 54 may be disposed to stand vertically. The first sidewall 54 may be formed in a plate shape as a whole.

The second sidewall 55 may be coupled to the other side of each of the blocking wall 52 and the facing wall 53. The second sidewall 55 and the first sidewall 54 may be disposed to face each other. At least one cartridge 22 may be disposed between the second sidewall 55 and the first sidewall 54. Through the second sidewall 55, the other side of the blocking wall 52 and the other side of the facing wall 53 may be connected to each other. The second sidewall 55 may correspond to any one of the plurality of sidewalls of the flow path changer 5. Based on FIG. 8, when the blocking wall 52 and the facing wall 53 are disposed to be laid horizontally, the second sidewall 55 may be disposed to stand vertically. The second sidewall 55 may be formed in a plate shape as a whole.

Here, the passage holes 51 may be formed to pass through at least one of the facing wall 53, the first sidewall 54, and the second sidewall 55. Accordingly, the first gas of which the flow direction has been changed by the blocking wall 52 may flow into the flow path changer 5 through the passage holes 51 and then flow into the cartridge 22. Accordingly, humidification using the first gas and the second gas may be performed inside the cartridge 22. In this case, since the passage holes 51 are not formed in the blocking wall 52, the blocking wall 52 may block passage of the first gas and may change the flow direction of the first gas so that the first gas flows toward the passage holes 51.

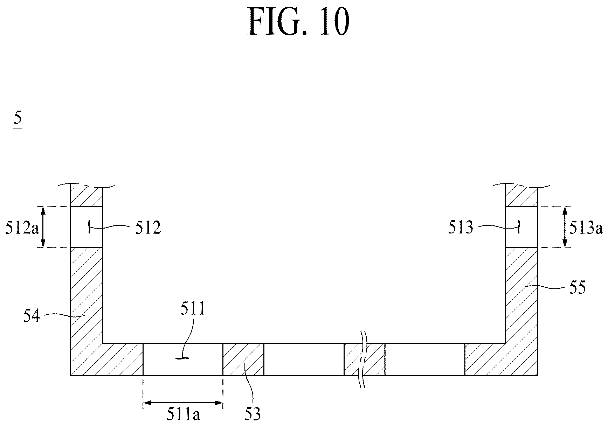

A facing passage hole 511 formed in the facing wall 53 among the passage holes 51 may be formed to have a larger area than a first sidewall passage hole 512 formed in the first sidewall 54 among the passage holes 51. That is, an inflow area through which the first gas flows into the flow path changer 5 through the facing passage hole 511 may be implemented to be larger than an inflow area through which the first gas flows into the flow path changer 5 through the first sidewall passage hole 512. For example, when the facing passage hole 511 and the first sidewall passage hole 512 are each formed in a circular shape, a diameter 511a (illustrated in FIG. 10) of the facing passage hole 511 may be formed to be larger than a diameter 512a (illustrated in FIG. 10) of the first sidewall passage hole 512.

Accordingly, the fuel cell humidifier 1 according to the present invention is implemented to further increase a flow rate of the first gas flowing into the flow path changer 5 through the facing passage hole 511 in response to the facing wall 53 being spaced a longer distance from the mid-inlet 212. Therefore, the fuel cell humidifier 1 according to the present invention can reduce deviation between a flow rate of the first gas flowing in from the facing wall 53 side and a flow rate of the first gas flowing in from the first sidewall 54 side. Accordingly, the fuel cell humidifier 1 according to the present invention can have higher humidification performance by improving uniformity of the flow rates of the first gas delivered toward the cartridge 22 in different directions relative to the cartridge 22.

Meanwhile, the facing passage hole 511 may be formed as a plurality of facing passage holes 511 in the facing wall 53. The facing passage holes 511 may be disposed apart from each other and may be formed to pass through different portions of the facing wall 53. The first sidewall passage hole 512 may be formed as a plurality of first sidewall passage holes 512 in the first sidewall 54. The first sidewall passage holes 512 may be disposed apart from each other and may be formed to pass through different portions of the first sidewall 54.

Among the passage holes 51, a second sidewall passage hole 513 formed in the second sidewall 55 and the first sidewall passage hole 512 may be formed to have areas equal to each other. That is, the second sidewall passage hole 513 and the first sidewall passage hole 512 may be formed to implement inflow areas equal to each other. For example, when the second sidewall passage hole 513 and the first sidewall passage hole 512 are each formed in a circular shape, a diameter 513a (illustrated in FIG. 10) of the second sidewall passage hole 513 and the diameter 512a of the first sidewall passage hole 512 may be formed to be equal to each other. Therefore, the fuel cell humidifier 1 according to the present invention can reduce deviation between a flow rate of the first gas flowing in from the second wall 55 side and a flow rate of the first gas flowing in from the first sidewall 54 side. Accordingly, the fuel cell humidifier 1 according to the present invention can have higher humidification performance because the uniformity of the flow rates of the first gas delivered toward the cartridge 22 in different directions relative to the cartridge 22 can be further improved. In this case, the second sidewall passage hole 513 may be formed to have a smaller area than the facing passage hole 511.

Meanwhile, the second sidewall passage hole 513 may be formed as a plurality of second sidewall passage holes 513 in the second sidewall 55. The second sidewall passage holes 513 may be disposed apart from each other and may be formed to pass through different portions of the second sidewall 55. The second sidewall passage holes 513 and the first sidewall passage holes 512 may be disposed to face each other.

Here, the flow path changer 5 may be disposed to be spaced from each of the inner surface of the mid-case 21 and the outer surface of the cartridge 22. Accordingly, a flow path for a flow of the first gas may be secured between the flow path changer 5 and the inner surface of the mid-case 21 in the fuel cell humidifier 1 according to the present invention. A first diffusion space DS1 for diffusion of the first gas flowing in through the mid-inlet 212 may be provided between the flow path changer 5 and the inner surface of the mid-case 21. In addition, a flow path for a flow of the first gas may be secured between the flow path changer 5 and the outer surface of the cartridge 22 in the fuel cell humidifier 1 according to the present invention. A second diffusion space DS2 for diffusion of the first gas flowing in through the passage holes 51 may be provided between the flow path changer 5 and the outer surface of the cartridge 22.

Therefore, the fuel cell humidifier 1 according to the present invention may be implemented so that, after the first gas flows into the mid-case 21 through the mid-inlet 212 and then primarily diffuses in the first diffusion space DS1, the first gas flows into the flow path changer 5 through the passage holes 51 and then secondarily diffuses in the second diffusion space DS2. Accordingly, the fuel cell humidifier 1 according to the present invention can have higher humidification performance because the uniformity of the flow rates of the first gas delivered toward the cartridge 22 in different directions relative to the cartridge 22 can be further improved. In this case, all of the blocking wall 52, the facing wall 53, the first sidewall 54, and the second sidewall 55 may be disposed apart from each of the inner surface of the mid-case 21 and the outer surface of the cartridge 22.

As illustrated in FIG. 9, the flow path changer 5 may be coupled to the first sealing 23. The flow path changer 5 may protrude from the first sealing 23 toward the mid-inlet 212 in the first axial direction (X-axis direction). Accordingly, the flow path changer 5 may be disposed to block passage of the first gas flowing in through the mid-inlet 212 using the blocking wall 52 and change the flow direction of the first gas flowing in through the mid-inlet 212. In this case, the flow path changer 5 may remain disposed apart from each of the inner surface of the mid-case 21 and the outer surface of the cartridge 22 by being supported by the first sealing 23.

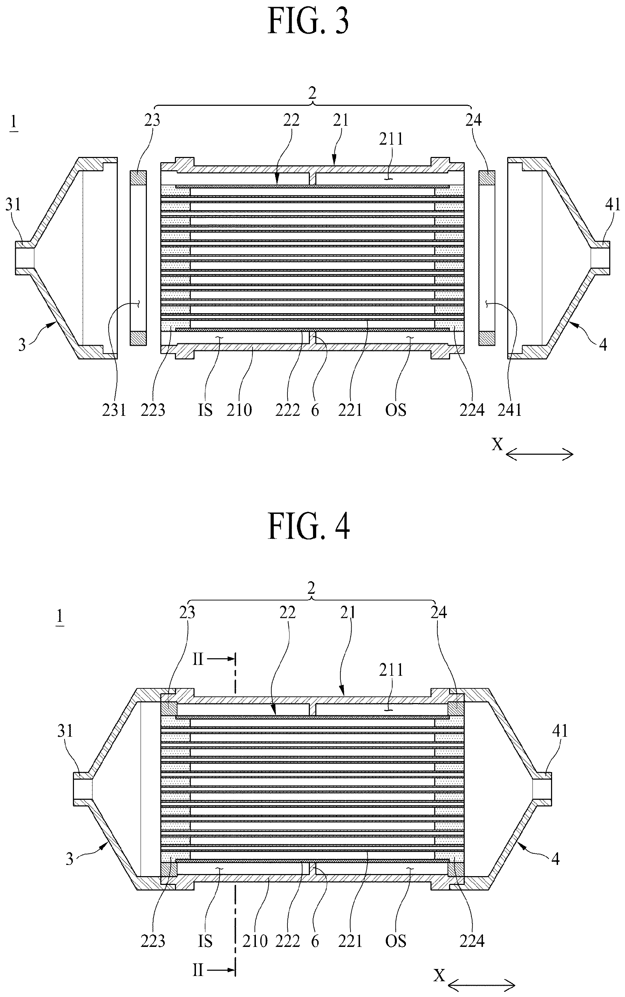

As illustrated in FIG. 9, the flow path changer 5 may also be coupled to a partition wall 6 of the mid-case 21. The partition wall 6 is disposed inside the mid-main body 210 and partitions the inside of the mid-main body 210 into an inflow space IS through which the first gas flows in and an outflow space OS (illustrated in FIG. 4) through which the first gas flows out. The cartridge 22 may be inserted into the partition wall 6 so that the inner inlet 225 is disposed in the inflow space IS and the inner outlet 226 is disposed in the outflow space OS. The flow path changer 5 may protrude from the partition wall 6 toward the mid-inlet 212 in the first axial direction (X-axis direction). Accordingly, the flow path changer 5 may be disposed to block passage of the first gas flowing in through the mid-inlet 212 using the blocking wall 52 and change the flow direction of the first gas flowing in through the mid-inlet 212. In this case, the flow path changer 5 may remain disposed apart from each of the inner surface of the mid-case 21 and the outer surface of the cartridge 22 by being supported by the partition wall 6.

As illustrated in FIG. 9, the flow path changer 5 may also be coupled to each of the partition wall 6 and the first sealing 23. Accordingly, the flow path changer 5 may partition the entire inflow space IS into the first diffusion space DS1 and the second diffusion space DS2. Therefore, the fuel cell humidifier 1 according to the present invention can further improve the uniformity of the flow rates of the first gas delivered toward the cartridge 22 by further increasing a diffusion force of the first gas using the first diffusion space DS1 and the second diffusion space DS2. Meanwhile, the flow path changer 5 may be disposed only in the inflow space IS and may not be disposed in the outflow space OS.

Here, the cartridge 22 may be implemented as follows in order to correspond to the flow path changer 5 as described above.

Referring to FIGS. 2 to 11, the inner inlet 225 may include a plurality of first facing windows 225a formed to pass through a first facing surface 222a of the inner case 222. The first facing surface 222a may correspond to a side surface disposed toward the blocking wall 52 of the flow path changer 5 among a plurality of side surfaces of the inner inlet 225. A portion of the first gas flowing into the flow path changer 5 through the passage holes 51 may flow between the first facing surface 222a and an inner surface of the blocking wall 52, may flow into the cartridge 22 through the first facing windows 225a, and may be delivered to the hollow fiber membrane bundle 221. Accordingly, the cartridge 22 is implemented so that the first gas can be delivered through the first facing windows 225a even to the hollow fiber membranes disposed close to the blocking wall 52 side among the hollow fiber membranes of the hollow fiber membrane bundle 221. Therefore, the fuel cell humidifier 1 according to the present invention can have higher humidification performance because a proportion of hollow fiber membranes involved in humidification among the hollow fiber membranes of the hollow fiber membrane bundle 221 can be increased. Meanwhile, the first facing windows 225a may be disposed apart from each other and may be formed to pass through different portions of the first facing surface 222a.

The inner inlet 225 may include a plurality of second facing windows 225b formed to pass through a second facing surface 222b of the inner case 222. The second facing surface 222b may correspond to a side surface disposed to face the first facing surface 222a among a plurality of side surfaces of the inner inlet 225. The second facing surface 222b may be disposed toward the facing wall 53 of the flow path changer 5. A portion of the first gas flowing into the flow path changer 5 through the facing passage holes 511 may pass between the second facing surface 222b and an inner surface of the facing wall 53, may flow into the cartridge 22 through the second facing windows 225b, and may be delivered to the hollow fiber membrane bundle 221. Accordingly, the cartridge 22 is implemented so that the first gas can be delivered through the second facing windows 225b to the hollow fiber membranes disposed close to the facing wall 53 side among the hollow fiber membranes of the hollow fiber membrane bundle 221. Therefore, the fuel cell humidifier 1 according to the present invention can have higher humidification performance because a proportion of hollow fiber membranes involved in humidification among the hollow fiber membranes of the hollow fiber membrane bundle 221 can be increased. Meanwhile, the second facing windows 225b may be disposed apart from each other and may be formed to pass through different portions of the second facing surface 222b.

The second facing window 225b may be formed to have a smaller area than the first facing window 225a. In this case, an inflow area through which the first gas flows into the cartridge 22 through the first facing window 225a may be implemented to be larger than an inflow area through which the first gas flows into the cartridge 22 through the second facing window 225b. For example, when the first facing window 225a and the second facing window 225b are each formed in a circular shape, a diameter of the first facing window 225a may be formed to be larger than a diameter of the second facing window 225b. In this case, the facing passage hole 511 may be formed to have a larger area than each of the first sidewall passage hole 512 and the second sidewall passage hole 513.

Accordingly, the fuel cell humidifier 1 according to the present invention is implemented to further increase a flow rate of the first gas flowing into the cartridge 22 through the first facing window 225a disposed closer to the blocking wall 52 in response to the first gas with a higher flow rate flowing into the flow path changer 5 from the facing wall 53 side than from the blocking wall 52 side. Therefore, the fuel cell humidifier 1 according to the present invention can reduce deviation between a flow rate of the first gas flowing in from the first facing surface 222a side and a flow rate of the first gas flowing in from the second facing surface 222b side. Accordingly, the fuel cell humidifier 1 according to the present invention can have higher humidification performance by improving the uniformity of the flow rates of the first gas delivered toward the hollow fiber membrane bundle 221 in different directions relative to the hollow fiber membrane bundle 221.

The inner inlet 225 may include a plurality of first side windows 225c formed to pass through a first side surface 222c of the inner case 222. The first side surface 222c may correspond to a side surface disposed toward the first sidewall 54 among the plurality of side surfaces of the inner inlet 225. A portion of the first gas flowing into the flow path changer 5 through the first sidewall passage holes 512 may pass between the first side surface 222c and an inner surface of the first sidewall 54, may flow into the cartridge 22 through the first side windows 225c, and then may be delivered to the hollow fiber membrane bundle 221. Accordingly, the cartridge 22 is implemented so that the first gas can be delivered through the first side windows 225c to the hollow fiber membranes disposed close to the first sidewall 54 side among the hollow fiber membranes of the hollow fiber membrane bundle 221. Therefore, the fuel cell humidifier 1 according to the present invention can increase a proportion of hollow fiber membranes involved in humidification among the hollow fiber membranes of the hollow fiber membrane bundle 221. Meanwhile, the first side windows 225c may be disposed apart from each other and may be formed to pass through different portions of the first side surface 222c.

The inner inlet 225 may include a plurality of second side windows 225d formed to pass through a second side surface 222d of the inner case 222. The second side surface 222d may correspond to a side surface disposed toward the second sidewall 55 among the plurality of side surfaces of the inner inlet 225. The second side surface 222d and the first side surface 222c may be disposed to face each other. A portion of the first gas flowing into the flow path changer 5 through the first sidewall passage holes 512 may pass between the second side surface 222d and an inner surface of the second sidewall 55, may flow into the cartridge 22 through the second side windows 225d, and then may be delivered to the hollow fiber membrane bundle 221. Accordingly, the cartridge 22 is implemented so that the first gas can be delivered through the second side windows 225d to the hollow fiber membranes disposed close to the second sidewall 55 side among the hollow fiber membranes of the hollow fiber membrane bundle 221. Therefore, the fuel cell humidifier 1 according to the present invention can increase a proportion of hollow fiber membranes involved in humidification among the hollow fiber membranes of the hollow fiber membrane bundle 221. Meanwhile, the second side windows 225d may be disposed apart from each other and may be formed to pass through different portions of the second side surface 222d.

The second side window 225d and the first side window 225c may be formed to have areas equal to each other. That is, the second side window 225d and the first side window 225c may be formed to implement inflow areas equal to each other. For example, when the second side window 225d and the first side window 225c are each formed in a circular shape, a diameter of the second side window 225d and a diameter of the first side window 225c may be formed to be equal to each other. Therefore, the fuel cell humidifier 1 according to the present invention can reduce deviation between a flow rate of the first gas flowing in from the second side surface 222d side and a flow rate of the first gas flowing in from the first side surface 222c side. Accordingly, the fuel cell humidifier 1 according to the present invention can have higher humidification performance because the uniformity of the flow rates of the first gas delivered toward the hollow fiber membrane bundle 221 in different directions relative to the hollow fiber membrane bundle 221 can be further improved.

Meanwhile, the second side window 225d and the first side window 225c may each be formed to have a larger area than the second facing window 225b. The second side window 225d and the first side window 225c may each be formed to have a smaller area than the first facing window 225a. In this case, the passage holes 51 may not be formed in the blocking wall 52, and the first sidewall passage hole 512 and the second sidewall passage hole 513 may each be formed to have a smaller area than the facing passage hole 511. Accordingly, the fuel cell humidifier 1 according to the present invention can further improve the uniformity of the flow rates of the first gas delivered toward the hollow fiber membrane bundle 221 in different directions relative to the hollow fiber membrane bundle 221 because a diffusion force with which the first gas flowing into the flow path changer 5 diffuses in the second diffusion space DS2 can be further increased.

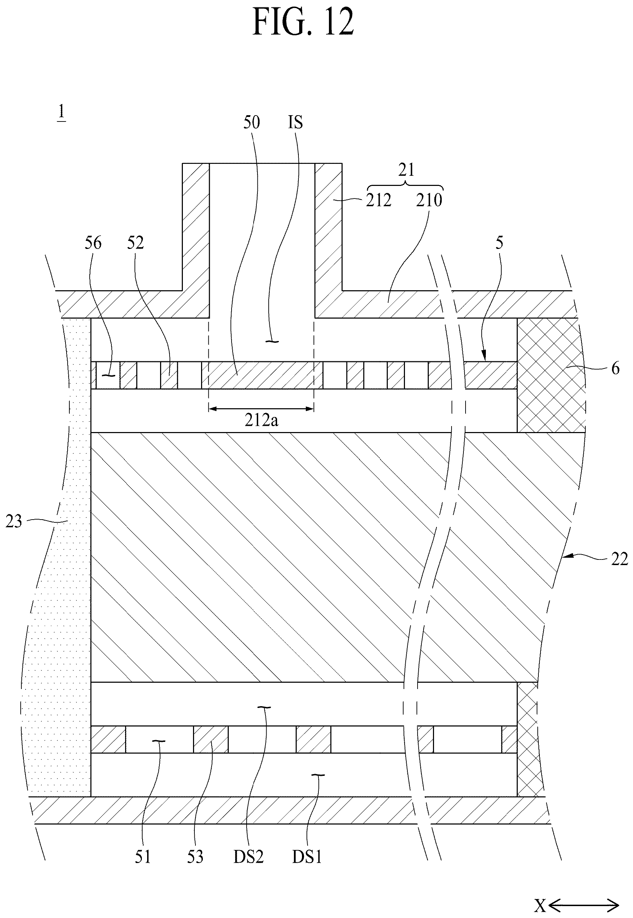

Referring to FIG. 12, the flow path changer 5 according to a modification of the present invention may include a plurality of avoidance holes 56.

The avoidance holes 56 may be formed to pass through the blocking wall 52. The avoidance holes 56 may be disposed at positions spaced from the blocking portion 50. In this case, the avoidance holes 56 may be formed to pass through the blocking wall 52 outside the inflow area 212a. Accordingly, the avoidance holes 56 may allow passage of the first gas at the positions spaced from the blocking portion 50. Therefore, the flow path changer 5 according to the modification of the present invention can block the first gas flowing in through the mid-inlet 212 from immediately being delivered toward the cartridge 22 using the blocking portion 50 and can improve the uniformity of the flow rates of the first gas delivered toward the cartridge 22 in different directions relative to the cartridge 22 using the avoidance holes 56. The avoidance holes 56 may be formed to pass through the blocking wall 52 at positions spaced from each other.

Referring to FIGS. 11 and 12, the avoidance hole 56 may be formed to have a smaller area than the facing passage hole 511. Accordingly, an inflow area through which the first gas flows into the flow path changer 5 through the avoidance hole 56 may be implemented to be smaller than an inflow area through which the first gas flows into the flow path changer 5 through the facing passage hole 511. For example, when the avoidance hole 56 and the facing passage hole 511 are each formed in a circular shape, the avoidance hole 56 may be formed with a smaller diameter than the facing passage hole 511. The avoidance hole 56 may also be formed to have a smaller area than the first sidewall passage hole 512. In this case, the avoidance hole 56 disposed relatively closest to the mid-inlet 212 may be formed to have the smallest diameter. Therefore, the fuel cell humidifier 1 according to the present invention can further improve the uniformity of the flow rates of the first gas delivered toward the cartridge 22 in different directions relative to the cartridge 22.

The present invention that has been described above is not limited to the above-described embodiments and the accompanying drawings, and it should be apparent to those of ordinary skill in the art to which the present invention pertains that various substitutions, modifications, and changes are possible within the scope not departing from the technical idea of the present invention.

**[Description of reference numerals]**

| | | | |
|---|---|---|---|
| 1: | fuel cell humidifier | | |
| 2: | humidification module | 21: | mid-case |
| 210: | mid-main body | 211: | accommodation hole |
| 212: | mid-inlet | 213: | mid-outlet |
| 22: | cartridge | 221: | hollow fiber membrane bundle |
| 222: | inner case | 222a: | first facing surface |
| 222b: | second facing surface | 222c: | first side surface |
| 222d: | second side surface | 223: | first fixing layer |
| 224: | second fixing layer | 225: | inner inlet |
| 2251: | inflow window | 225a: | first facing window |
| 225b: | second facing window | 225c: | first side window |
| 225d: | second side window | 226: | inner outlet |
| 2261: | outflow window | 23: | first sealing |
| 231: | first insertion hole | 24: | second sealing |
| 241: | second insertion hole | 3: | first cap |
| 31: | first port | 4: | second cap |
| 41: | second port | 5: | flow path changer |
| 50: | blocking portion | 51: | passage hole |
| 511: | facing passage hole | 511a: | diameter of facing passage hole |
| 512: | first sidewall passage hole | 512a: | diameter of first sidewall passage hole |
| 513: | second sidewall passage hole | 513a: | diameter of second sidewall passage hole |
| 52: | blocking wall | 53: | facing wall |
| 54: | first sidewall | 55: | second sidewall |
| 6: | partition wall | DS1: | first diffusion space |
| DS2: | second diffusion space | IS: | inflow space |
| OS: | outflow space | 212a: | inflow area |

## Claims

1. A fuel cell humidifier comprising:
a humidification module using a wet gas to humidify a dry gas to be supplied to a fuel cell stack;
a first cap coupled to one end of the humidification module; and
a second cap coupled to the other end of the humidification module,
wherein the humidification module includes a cartridge including a hollow fiber membrane bundle, a mid-case in which the cartridge is accommodated, and a flow path changer disposed between an inner surface of the mid-case and an outer surface of the cartridge,
the mid-case includes a mid-inlet for inflow of a first gas and a mid-outlet that is disposed apart from the mid-inlet in a first axial direction for outflow of the first gas,
the cartridge is disposed inside the flow path changer, and
the flow path changer includes a blocking portion disposed to correspond to the mid-inlet to block passage of the first gas and a plurality of passage holes formed at positions spaced from the blocking portion.

2. The fuel cell humidifier of claim 1, wherein the blocking portion is formed without the passage holes and guides the first gas flowing in through the mid-inlet to flow in a direction other than toward the cartridge.

3. The fuel cell humidifier of claim 1, wherein the flow path changer is disposed to be spaced from each of the inner surface of the mid-case and the outer surface of the cartridge.

4. The fuel cell humidifier of claim 3, wherein:
a first diffusion space for diffusion of the first gas flowing in through the mid-inlet is provided between the flow path changer and the inner surface of the mid-case; and
a second diffusion space for diffusion of the first gas flowing in through the passage holes is provided between the flow path changer and the outer surface of the cartridge.

5. The fuel cell humidifier of claim 1, wherein:
the mid-case includes a mid-main body in which the cartridge is accommodated and a partition wall partitioning an inside of the mid-main body into an inflow space through which the first gas flows in and an outflow space through which the first gas flows out; and
the flow path changer is coupled to the partition wall to protrude from the partition wall toward the mid-inlet in the first axial direction.

6. The fuel cell humidifier of claim 1 or 5, wherein:
the humidification module includes a first sealing that seals between the inner surface of the mid-case and the outer surface of the cartridge at one end of the mid-case; and
the flow path changer is coupled to the first sealing to protrude from the first sealing toward the mid-inlet in the first axial direction.

7. The fuel cell humidifier of claim 1, wherein the flow path changer includes:
a blocking wall including the blocking portion, disposed toward the mid-inlet, and blocking passage of the first gas;
a facing wall disposed to face the blocking wall;
a first sidewall coupled to one side of each of the blocking wall and the facing wall; and
a second sidewall coupled to the other side of each of the blocking wall and the facing wall,
wherein the passage holes are formed to pass through at least one of the facing wall, the first sidewall, and the second sidewall.

8. The fuel cell humidifier of claim 7, wherein a facing passage hole formed in the facing wall among the passage holes is formed to have a larger area than a first sidewall passage hole formed in the first sidewall among the passage holes.

9. The fuel cell humidifier of claim 7, wherein a first sidewall passage hole formed in the first sidewall among the passage holes and a second sidewall passage hole formed in the second sidewall among the passage holes are formed to have areas equal to each other.

10. The fuel cell humidifier of claim 7, wherein:
the cartridge includes an inner case in which the hollow fiber membrane bundle is accommodated and an inner inlet that is formed in the inner case for inflow of the first gas; and
the inner inlet includes a plurality of first facing windows formed to pass through a first facing surface of the inner case that is disposed toward the blocking wall.

11. The fuel cell humidifier of claim 10, wherein the inner inlet includes a plurality of second facing windows formed to pass through a second facing surface disposed to face the first facing surface.

12. The fuel cell humidifier of claim 7, wherein:
the cartridge includes an inner case in which the hollow fiber membrane bundle is accommodated and an inner inlet that is formed in the inner case for inflow of the first gas; and
the inner inlet includes a plurality of first side windows formed to pass through a first side surface of the inner case that is disposed toward the first sidewall and a plurality of second side windows formed to pass through a second side surface of the inner case that is disposed toward the second sidewall.

13. The fuel cell humidifier of claim 7, wherein:
the flow path changer includes a plurality of avoidance holes formed to pass through the blocking wall; and
the avoidance holes are disposed at positions spaced from the blocking portion and allow passage of the first gas.
